# EUROPÄISCHE PATENTSCHRIFT

(11) **EP 2 407 604 B1**
(45) Veröffentlichungstag und Bekanntmachung des Hinweises auf die Patenterteilung: **08.01.2014**
(21) Anmeldenummer: 11173739.1
(22) Anmeldetag: 13.07.2011
(51) Int. Cl.: E04B 2/74, E04H 17/16, F16B 7/04, E05C 19/06, F16B 37/04

(54) **Verbindungsvorrichtung**
Connecting device
Dispositif de connexion

(30) Priorität: 13.07.2010 DE 202010010155 U
(43) Veröffentlichungstag der Anmeldung: 18.01.2012
(73) Patentinhaber: RK Rose + Krieger GmbH System- & Lineartechnik, 32423 Minden (DE)
(72) Erfinder: Lampert, Rolf, 32584 Löhne (DE); Scheibe, Jörg, 31655 Stadthagen (DE)
(74) Vertreter: Alber, Norbert

(56) Entgegenhaltungen:
- EP-A2- 1 985 780
- WO-A1-03/106788
- DE-U1-202008 016 386
- US-A- 3 908 320
- US-B1- 6 253 517

## Beschreibung

### I. Anwendungsgebiet

Die Erfindung betrifft eine Verbindungsvorrichtung zum Verbinden zweier etwa parallel laufender Konstruktionsprofile, die wie üblich hinterschnittene Nuten auf ihrem Außenumfang besitzen. DE 20 2008 016386 U1 offenbart eine solche Verbindungsvorrichtung.

### II. Technischer Hintergrund

In der Industrie werden Konstruktionsprofile mit in Längsrichtung verlaufenden, auf den Außenseiten angeordneten, hinterschnittenen Nuten häufig benutzt, um Tragkonstruktionen, Gestelle oder Ähnliches auf einfache Art und Weise herzustellen, indem diese Konstruktionsprofile über entsprechende Eckverbinder, Winkelverbinder und Ähnliches, die in den Nuten passende Nutensteine zum Verklemmen benutzen, zu stabilen Traggestellen verbunden werden können.

Hierfür gibt es auch Verbindungselemente, die zwei etwa parallel zueinander knapp nebeneinander verlaufende Konstruktionsprofile miteinander verbinden, jedoch sind diese Verbindungselemente in der Regel immer dafür vorgesehen, die Konstruktionsprofile auf Dauer miteinander zu verbinden. Zwar sind die Verbindungselemente in der Regel lösbar ausgestaltet, jedoch ist der Lösevorgang zeitaufwendig, indem Schrauben gelöst werden müssen und Ähnliches.

Es gibt jedoch Anwendungsfälle, bei denen zwei etwa parallel zueinander verlaufende Verbindungsprofile mithilfe geeigneter Verbindungsvorrichtungen fest verbunden, jedoch auch sehr schnell wieder voneinander getrennt werden müssen.

Dies ist beispielsweise bei Schutzgittern der Fall, die in der Industrie zur Abgrenzung von Maschinen und Arbeitsräumen gegeneinander aus Sicherheitsgründen erstellt werden:
Dabei werden in einem meist regelmäßigen Abstand von ca. 2 Metern in der Regel vertikale Pfosten auf dem Boden befestigt, und anschließend Gitterfelder, die die Trennfunktion bewirken, zwischen diesen Pfosten montiert.
Dabei bestehen häufig die Pfosten des Schutzgitters ebenso wie die Rahmen der Gitterfelder aus den besagten Konstruktionsprofilen. Da gerade beim Montieren oder bei der Inbetriebnahme eine Maschine mittels einer solchen Schutzvorrichtung abgetrennt werden soll, muss hin und wieder eines der Gitterfelder zwischen zwei Pfosten wieder entnommen werden, um an dieser Stelle kurzzeitig den Zugang zur Maschine sicherzustellen. Daher müssen die Gitterfelder wieder von den Pfosten entfernt werden können.

### III. Darstellung der Erfindung

### a) Technische Aufgabe

Es ist daher die Aufgabe gemäß der Erfindung, eine Verbindungsvorrichtung zur Verfügung zu stellen, mit deren Hilfe zwei etwa parallel zueinander verlaufende Konstruktionsprofile schnell gegeneinander fixiert und ebenfalls schnell wieder voneinander gelöst werden können. Insbesondere soll auch eine provisorische Befestigung gegeneinander möglich sein.

### b) Lösung der Aufgabe

Diese Aufgabe wird durch die Merkmale der Ansprüche 1 und 16 gelöst.

Vorteilhafte Ausführungsformen ergeben sich aus den Unteransprüchen.

### Einrastendes Verbindungselement:

Das im Anspruch 1 beschriebene einrastendes Verbindungselement wird mittels Nutenstein und Klemmschraube auf der Außenseite eines Konstruktionsprofils verschraubt, welches eine hinterschnittene Nut zum Aufnehmen des Nutensteins besitzt.

Eine Einhängeschraube, die mittels Nutenstein in der hinterschnittenen Nut auf der Außenseite eines anderen Konstruktionsprofils verschraubt ist und von diesem Konstruktionsprofil um eine definierte Länge vorsteht, kann in den einseitig offenen Aufnahmeraum des Verbindungselementes eingehängt werden und verrastet dort aufgrund eines Riegelzapfens dieses Verbindungselementes, der die offene Seite des Aufnahmeraumes für den Schaft der Einhängeschraube soweit verschließt, dass der Schaft ohne aktives Wegbewegen des Riegelzapfens nicht aus dem Aufnahmeraum herausbewegt werden kann, wofür eine separate Öffnungsvorrichtung am Verbindungselement ausgebildet ist.

Auf diese Art und Weise kann das das Verbindungselement tragende Profil am anderen Profil, welches die Einhängeschraube trägt, einfach eingehängt werden, da der Schaft der Einhängeschraube den Riegelzapfen während des Einführens in den Aufnahmeraum leicht beiseite schieben kann, aber umgekehrt beim Entfernen mittels des Schraubenschaftes der Riegelzapfen nicht in die offene, nicht verriegelnde Stellung bewegt werden kann.

Der Grundkörper des Verbindungselementes, in dem der Aufnahmeraum ausgebildet ist, besteht in der Regel aus Kunststoff oder Leichtmetall-Druckguss und ist vorzugsweise mittensymmetrisch zu seiner Mittelebene ausgebildet, die die Mitte zwischen den beiden Anlageflächen bildet, mit denen der Grundkörper an den beiden zu verbindenden Konstruktionsprofilen anliegt, und darin zentriert wird mittels eines Zentriervorsprunges, der auf der Anlagefläche ausgebildet ist und vorzugsweise in Längsrichtung verläuft, und etwas in die Nut hineinragt.

Die Durchgangsrichtung für den Aufnahmeraum und damit die Längsrichtung der Einhängeschraube verläuft quer zu dieser Mittelebene und die offene Seite des Aufnahmeraumes weist zu einer der beiden die Anlageflächen verbindenden und in gleicher Richtung verlaufenden Seitenflächen hin. Die offene Seite des Aufnahmeraumes ist vorzugsweise die untere Seite.

Die Anlageflächen für die verbreiterten Köpfe von Klemmschraube einerseits und Einhängeschraube andererseits sind gegenüber den Anlageflächen zurückversetzt, so dass in diesem Bereich die Dicke des Grundkörpers maximal noch 50%, besser nur maximal 35% der in der Durchgangsrichtung gemessenen Dicke des gesamten Grundkörpers beträgt.

In den Aufnahmeraum gelangt die Einhängeschraube über einen Einhängedurchlass, der sich zur offenen Seite hin einen trichterförmigen Einlaufbereich aufweitet, der von zwei schräg aufeinander zulaufenden Schrägflächen gebildet wird.

Am Übergang des Einhängedurchlasses in den Aufnahmeraum definiert der Einhängedurchlass einen Führungskanal, der auf einer Seite, nämlich dem Aufnahmeraum gegenüberliegend, von dem Riegelzapfen begrenzt wird, der vorzugsweise einstückig mit dem Grundkörper ausgebildet ist und an seinem Übergang zum Grundkörper elastisch verschwenkbar ist.

Der Führungskanal ist nur dann ausreichend breit zum Hindurchführen des Schaftes der Einhängeschraube, wenn der Riegelzapfen aus seiner Normalstellung in einen Ausweichraum abseits des Führungskanals hinein ausgelenkt wird, was beim Einführen der Schraube in den Aufnahmeraum durch die Anpresskraft der Schraube selbst geschieht.

Anschließend weist der wieder entlastete, in Querrichtung elastische Riegelzapfen jedoch mit seiner freien vorderen Stirnfläche gegen den Umfang der im Aufnahmeraum befindlichen Einhängeschraube, so dass bei Druck der Schraube gegen diese Stirnfläche der Riegelzapfen zwar in seiner Längsrichtung beaufschlagt wird, aber dadurch nicht zur Seite schwenkt, was für das Freigeben des Führungskanals notwendig wäre.

Um sicherzustellen, dass der Riegelzapfen nach Verschwenken in den Ausweichraum wieder seine Normalstellung, also die Riegelstellung, einnimmt, z. B. wenn der Riegelzapfen durch eine Fehlbedienung über lange Zeit in dem Ausweichraum verschwenkt gehalten wurde, ist der Riegelzapfen mittels eines separaten Spannelementes in diese Riegelstellung hin vorgespannt, also von der Richtung des Ausweichraumes her in die Riegelstellung vorgespannt.

Das Spannelement ist vorzugsweise ein elastisches Element, welches aufgrund seiner Elastizität eine Vorspannkraft gegen den Riegelzapfen bewirkt, beispielsweise eine helixförmige Spiralfeder, die als Rückstellfeder dient.

Um einen ausreichenden Hebel zu schaffen, drückt ein solches Spannelement nahe des freien Endes gegen den Riegelzapfen, der dadurch in einer Ebene parallel zu den Anlageflächen bewegt, insbesondere verschwenkt, wird.

Um den Riegelzapfen ausreichend lang auszubilden, erstreckt sich der Einhängedurchlass auf der vom Aufnahmeraum gegenüberliegenden Seite soweit weg, dass der Boden des Einhängedurchlasses von dem Aufnahmeraum soweit entfernt ist, dass ein vom Boden des Einhängedurchlasses bis zum Aufnahmeraum aufragender Riegelzapfen eine ausreichende Länge besitzt, vorzugsweise eine Länge mindestens entsprechend dem doppelten Durchmesser des Aufnahmeraumes.

Das Spannelement, insbesondere ein elastisches Spannelement, stützt sich frontseitig am Riegelzapfen und rückseitig am Grundkörper ab.

Insbesondere wenn das Spannelement eine Spiralfeder ist, erstreckt sie sich mit ihrem rückseitigen Ende in eine Vertiefung des Grundkörpers hinein, durch die sie auch seitlich geführt wird und liegt mit ihrer frontseitigen Stirnfläche am Riegelzapfen an.

Aus Gründen der Montagefreundlichkeit und Auswechselbarkeit dieser Rückstellfeder ist die Vertiefung als Durchgangsöffnung im Grundkörper ausgeführt, so dass die Rückstellfeder von der Außenseite des Grundkörpers her in diese Durchgangsöffnung gegen den Riegelzapfen vorgeschoben werden kann und anschließend in die Durchgangsöffnung auf der Rückseite der Fall ein montierbarer und demontierbarer Anschlag für die Rückstellfeder in der Durchgangsöffnung eingesetzt werden kann.

Ein solcher Anschlag kann darin z. B. mittels Gewinde oder Bajonett-Verschluss fixiert werden und insbesondere kann es sich dabei um einen im Querschnitt runden Schraubanschlag mit einem Außengewinde handeln, welches in das entsprechend Innengewinde der Durchgangsöffnung des Grundkörpers einschraubbar ist und vorzugsweise im montierten Zustand nicht über die Außenkontur des Grundkörpers vorsteht.

Auf der Seite des Riegelzapfens ist das Spannelement, insbesondere die Rückstellfeder, in Querrichtung formschlüssig geführt durch eine formschlüssige Oberflächengestaltung des Riegelelementes, insbesondere eine Führungserhebung, die in das offene Ende der z. B. Spiralfeder als Rückstellfeder hineinragt.

Die gegen den Riegelzapfen aufgebrachte Kraft des Spannelementes, insbesondere der Rückstellfeder 30, wird dabei so bemessen, dass sie den Riegelzapfen in der Riegelstellung hält bzw. in diese zurück stellt, aber nicht darüber hinaus in Richtung des offenen Einlasses verlagert.

Das Freigeben des Führungskanals kann außer - dem durch das Einführen des Schaftes der Einhängeschraube - nur durch Betätigen der Öffnungsvorrichtung erreicht werden, die aus einem Entriegelungsdurchlass im Grundkörper besteht, der auf eine Lücke zwischen dem Riegelzapfen und dem gegenüberliegenden Teil des Grundkörpers gerichtet ist.

Da der Querschnitt des Entriegelungsdurchlasses größer ist als die besagte Lücke, kann durch Einführen eines passenden Entriegelungswerkzeuges durch den Entriegelungsdurchlass in die Lücke hinein die Lücke entsprechend des Querschnittes des Entriegelungswerkzeuges vergrößert werden mit der Folge, dass der Riegelzapfen von der Seite der Lücke weg in die Gegenrichtung verschwenkt wird und damit in den Ausweichraum hinein, wodurch der Führungskanal zum Herausbewegen der Einhängeschraube aus ihrem Aufnahmeraum wieder frei wird.

Damit nicht jedes beliebige Flachmaterial wie etwa ein Schraubenzieher als Entriegelungswerkzeug benutzt werden kann, besitzt der Entriegelungsdurchlass eine von einem Flachmaterial, also etwa einem Rechteck, abweichende Querschnittsform, beispielsweise eine bogenförmige Querschnittsform, so dass die Entriegelungsvorrichtung nur mit einem entsprechend geformten Spezialwerkzeug betätigt werden kann.

Auf diese Art und Weise ist sichergestellt, dass nach dem Einrasten einer Einhängeschraube im rastenden Verbindungselement diese Verbindung nur mit einem Spezialwerkzeug und damit von einer autorisierten Person wieder geöffnet werden kann.

Da es notwendig sein kann, das mit dem rastenden Verbindungselement ausgestattete Profil zunächst nur provisorisch und sehr leicht entfernbar an dem anderen Verbindungsprofil zu haltern, umfasst die Verbindungsvorrichtung ein Zusatzteil, welches am Grundkörper des Verbindungselementes befestigt werden kann und vorzugsweise formschlüssig befestigt werden kann durch Einschieben in Durchgangsrichtung am Verbindungselement.

Das Zusatzteil weist eine etwa hakenförmige Querschnittsform auf - betrachtet in Durchgangsrichtung ― mit einer nach unten offenen Einhängebucht, die begrenzt wird von einem langen und einem kurzen seitlichen Schenkel.

Der lange Schenkel wird an derjenigen Seitenfläche des Grundkörpers des Verbindungselementes befestigt, in der der trichterförmige, zum Aufnahmebereich hinführende, Einlaufbereich mündet und zwar so, dass dieser Einlaufbereich dadurch verschlossen wird.

Somit befindet sich die Einhängebucht neben dem Grundkörper des Verbindungselementes und mit dieser Einhängebucht kann das Verbindungselement provisorisch über den Schaft der Einhängeschraube gehängt werden.

Diese provisorische Verbindung ist in keiner Weise gesichert und kann durch einfaches Abheben der Verbindungsvorrichtung mit dem Zusatzteil vom Schaft der Einhängeschraube wieder gelöst werden.

Sobald die Verbindung zwischen den beiden Verbindungsprofilen von Dauer sein soll, wird dieses Zusatzteil vom Verbindungselement entfernt und der Schaft der Einhängeschraube in den Aufnahmeraum eingeführt und dort verrastet.

### Nicht rastendes Verbindungselement:

Die Verbindungsvorrichtung kann ferner zusätzlich zu dem rastenden Verbindungselement ein nicht einrastendes Verbindungselement umfassen:
   Wenn zwei Konstruktionsprofile gegeneinander fixiert werden sollen, sind hierfür in Längsrichtung beabstandet mindestens zwei Verbindungspunkte notwendig.

Dabei ist es in vielen Anwendungsfällen sinnvoll, nur an einem der Verbindungspunkte ein einrastendes Verbindungselement zu verwenden, an dem zweiten bzw. allen weiteren nicht rastende Verbindungselemente, die das Lösen der Verbindung insgesamt zwischen den Verbindungsprofilen wesentlich erleichtern, da dann nicht mehrere einrastende Verbindungselemente gleichzeitig gelöst werden müssen, um die Verbindung zwischen den beiden Konstruktionsprofilen zu lösen.

Ein solches nicht rastendes Verbindungselement besitzt zum einen ― wie das rastende Verbindungselement ― wiederum einen Klemmdurchlass, durch den eine Klemmschraube durch den Grundkörper geführt werden kann, um ihn mittels eines Nutensteins in einer der Nuten des vorzugsweise selben Konstruktionsprofiles zu verschrauben wie das rastende Konstruktionsverbindungselement.

Unterhalb des Klemmdurchlasses befindet sich im Grundkörper ein Aufnahmeraum, wiederum für den Schraubenschaft einer vom anderen Konstruktionsprofil abstrebenden Einhängeschraube, der zu einer Seite des Grundkörpers hin - vorzugsweise zur unteren Stirnfläche dieses Grundkörpers hin - offen ist und einen sich zum offenen Ende hin konisch erweiternden Einlauf aufweist, der von zwei Flanken begrenzt wird, die zwischen dem konischen Einlauf und dem Aufnahmeraum parallel zueinander verlaufen.

Die Länge dieser parallel zueinander verlaufenden Flanken ist dabei mindestens so groß wie bei dem rastbaren Verbindungselement der Abstand vom Aufnahmeraum zum schmalsten Punkt des konischen Einlaufes gemessen in der gleichen Richtung, in der die beiden Flanken beim nicht rastenden Verbindungselement verlaufen.

Da bei diesem Grundkörper kein Riegelzapfen vorhanden ist, der den Aufnahmeraum nach dem Einführen der Einhängeschraube in den Aufnahmeraum verschließt, kann die Einhängeschraube jederzeit wieder aus dem Aufnahmeraum und damit dem nicht rastenden Verbindungselement entfernt werden durch einfaches Abheben dieses Verbindungselementes von dem Schaft der Einhängeschraube.

Auf diese Art und Weise genügt für das Lösen der Verbindung zwischen zwei durch die beschriebene Verbindungsvorrichtung verbundenen Konstruktionsprofilen das Betätigen der Entriegelungsvorrichtung des einen, rastbaren Verbindungselementes, um das rastbare Verbindungselement von der dortigen Einhängeschraube entfernen zu können und durch weiteres Anheben auch das nicht rastende Verbindungselement, welches vorzugsweise das untere der beiden Verbindungselement ist, von der dortigen Einhängeschraube abzuheben.

Für spezielle Anwendungen kann in den nicht rastenden Verbindungselement dennoch eine Sicherung vorgesehen werden, vorzugsweise in Form einer Gewindebohrung, die quer zur Durchgangsrichtung unter dem Aufnahmeraum im Grundkörper angeordnet ist zum Einschrauben einer Sicherungsschraube, die dann den Aufnahmeraum nach unten verschließt.

Ein typischer Anwendungsfall für derartige Verbindungselemente ist das Erstellen von großräumigen Schutzgittern, beispielsweise zum Abtrennen der Arbeitsräume einzelner Maschinen in einer Produktionshalle in der Industrie.

Dabei bestehen die Schutzgitter aus am Boden oder an der Decke montierten, zueinander beabstandeten, meist vertikal verlaufenden Pfosten in Form von Konstruktionsprofilen, zwischen denen Gitterfelder befestigt werden, so dass ein durchgängiges Schutzgitter entsteht.

Die Gitterfelder ihrerseits besitzen wiederum einen außen umlaufenden Rahmen, von dem zumindest die parallel zu dem Pfosten verlaufenden Schenkel ebenfalls Konstruktionsprofile der Eingangs beschriebenen Art, also mit hinterschnittener Nut auf wenigstens einer ihrer Außenseiten, sind, die im Inneren von Platten, Gittern oder Ähnlichem gefüllt sind.

Dabei sind in der Regel zwei Befestigungselemente übereinander auf jeder Seite eines Gitterfeldes angeordnet, wovon die unteren die nicht rastenden Verbindungselemente und die oberen die rastenden Verbindungselemente sind.

Wenn die von einem solchen Schutzgitter beispielsweise abgetrennte Maschine in Betrieb genommen wird, ist in der Regel ein gelegentlicher Zugang ins Innere des Schutzgitters notwendig, so dass die meist einzige in dem Schutzgitter angeordnete und gesicherte Tür hierfür nicht ausreicht, zumal sie in der Regel nicht an einer solchen Stelle sitzt, die einen optimal kurzen Zugang zu der momentan im Vordergrund stehenden Stelle der Maschine, insbesondere beim Einrichten der Maschine, bietet.

In dieser Phase können ein oder mehrere Gitterfelder des Schutzgitters nur provisorisch mit Hilfe des Zusatzteiles an den Pfosten eingehängt und sehr leicht wieder gelöst werden.

Dabei ist jedoch für jedermann auf den ersten Blick ersichtlich, dass dieses provisorisch eingehängte Gitterfeld nicht dauerhaft eingehängt ist, da es im Bereich der provisorischen Einhängung nicht in der Ebene zwischen den tragenden Pfosten hängt, sondern seitlich versetzt hierzu.

Ein versehentliches Belassen bei der nur provisorischen Einhängung ist daher ausgeschlossen.

Nach dauerhafter Montage der Gitterfelder können diese nur mit Hilfe des Spezialwerkzeuges ausgehängt werden.

Wenn die rastbaren Verbindungselemente mit der Mündungsseite des Einlaufesbereiches nach innen, also zur Maschine hin, montiert werden, kann ein dort versehentlich eingeschlossene Person zur Not und mit vergrößertem Zeitaufwand auch ohne Spezialwerkzeug durch den Einlaufbereich hindurch den Riegelzapfen in die offene Stellung bewegen mit einem z. B. normalen Schraubenzieher, jedoch ist dies von der Außenseite des Schutzgitters her dann nicht möglich.

### c) Ausführungsbeispiele

Ausführungsformen gemäß der Erfindung sind im Folgenden beispielhaft näher beschrieben. Es zeigen:
- Fig. 1a:: ein Schutzgitter im eingerasteten Zustand,
- Fig. 1b:: ein Schutzgitter im ausgerasteten Zustand,
- Fig. 1c:: das rastende Verbindungselement aus Figur 1b,
- Fig. 1d:: das nicht rastende Verbindungselement aus Figur 1b,
- Fig. 1e:: das rastende Verbindungselement mit Zusatzteil,
- Fig. 2a:: das rastende Verbindungselement in perspektivischer Ansicht,
- Fig. 2b:: im montierten Zustand von unten,

- Fig. 3:: das rastende Verbindungselement in Einzelansichten,
- Fig. 4:: das rastende Verbindungselement mit Zusatzteil,
- Fig. 5a:: das nicht rastende Verbindungselement in perspektivischer Ansicht,
- Fig. 5b:: das nicht rastende Verbindungselement in Einzelansichten, und
- Fig. 6:: den Einrast- und Entriegelungsvorgang,
- Fig. 7:: ein rastendes Verbindungselement mit zusätzlicher Rückstellfeder.

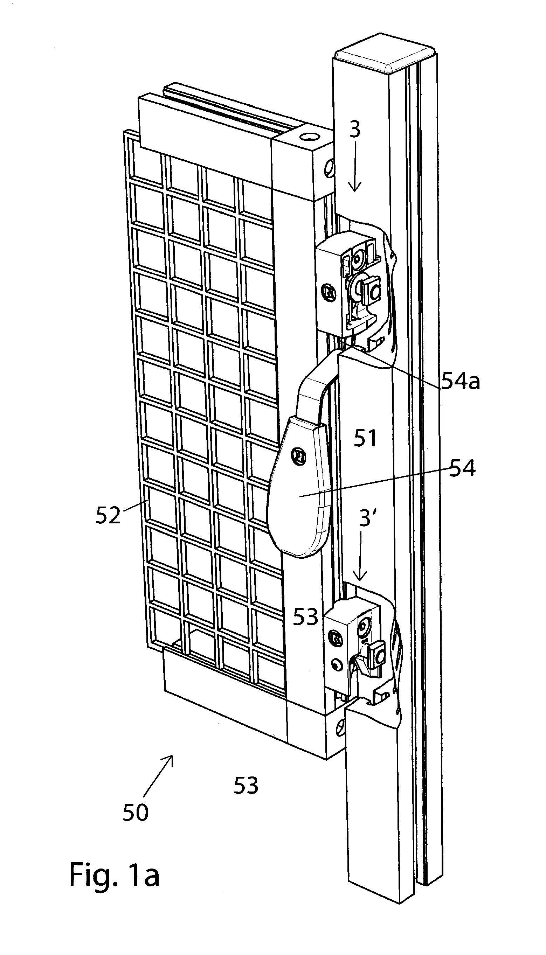

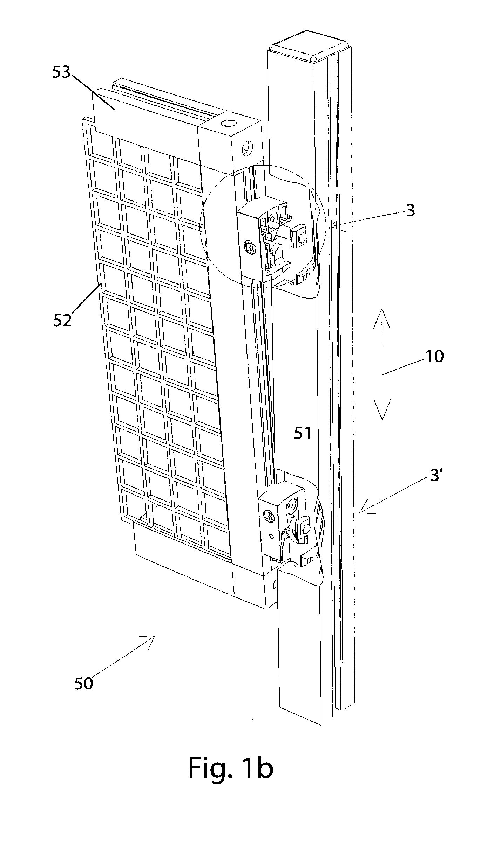

Die Figuren 1a und 1b zeigen den typischen Anwendungsfall der erfindungsgemäßen Verbindungselemente, nämlich ein Schutzgitter, in einer Teildarstellung.

Wie am besten Figur 1a zeigt, ist ein Gitterfeld 52, dessen Gitter von einem Rahmen 53 aus Konstruktionsprofilen in der Regel umlaufend eingeschlossen ist, mit seinen vertikalen Schenkeln dieses Rahmens 53 an vertikalen Pfosten 51 befestigt mit Hilfe der erfindungsgemäßen Verbindungselemente, nämlich an zwei Befestigungspunkten übereinander.

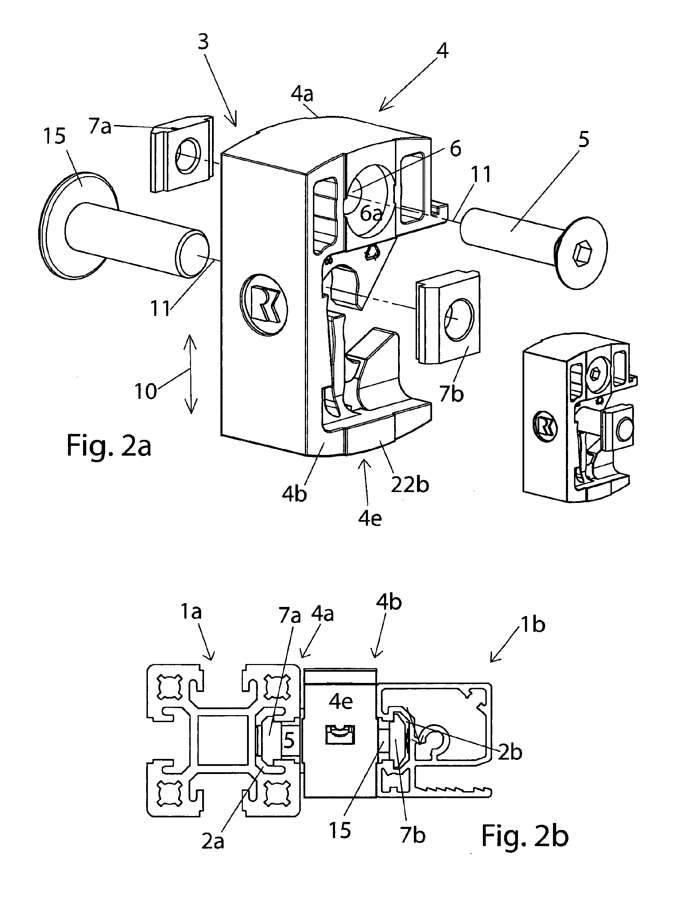

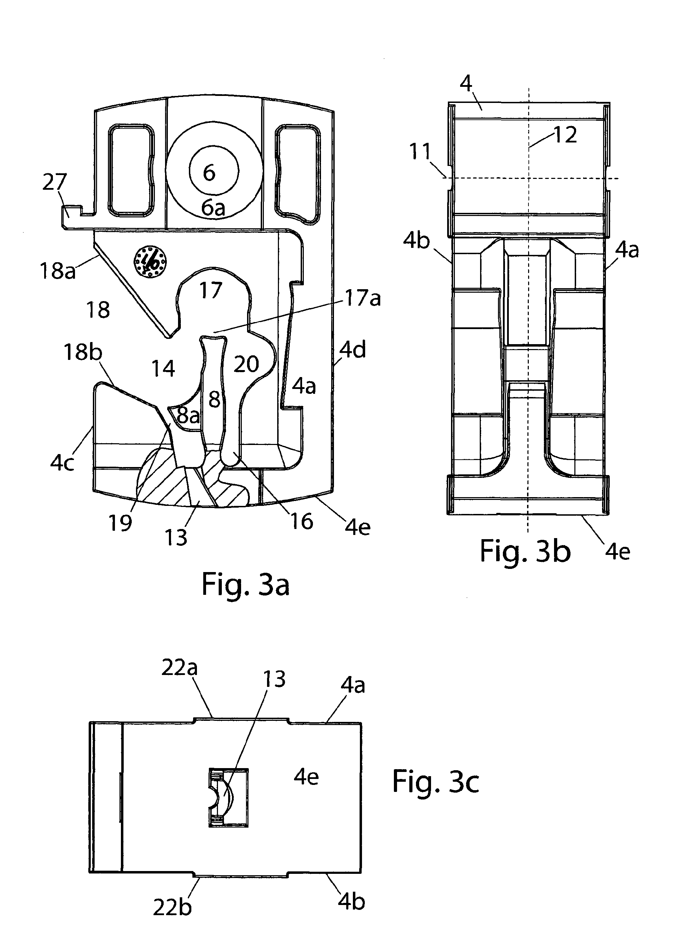

Im Folgenden werden die beiden Verbindungselemente einzeln betrachtet, zunächst anhand der Figuren 2 und 3 das einrastende Verbindungselement 3:
Dabei ist am oberen Befestigungspunkt ein einrastendes Verbindungselement 3 benutzt und am unteren Verbindungspunkt ein nicht einrastendes Verbindungselement 3'.

In Figur 1a ist das Gitterfeld 52 im eingehängten Zustand am Pfosten 51 dargestellt, also mit einem eingerasteten oberen Verbindungselement 3, während in der Darstellung der Figur 1b beim oberen, rastenden Verbindungselement 3, der Zustand kurz vor bzw. nach dem Einrasten dargstellt ist. Zusätzlich ist in Figur 1a das Entriegelungswerkzeug 54 dargestellt, mit dem das einrastende Verbindungselement 3 bei Bedarf entriegelt werden kann.

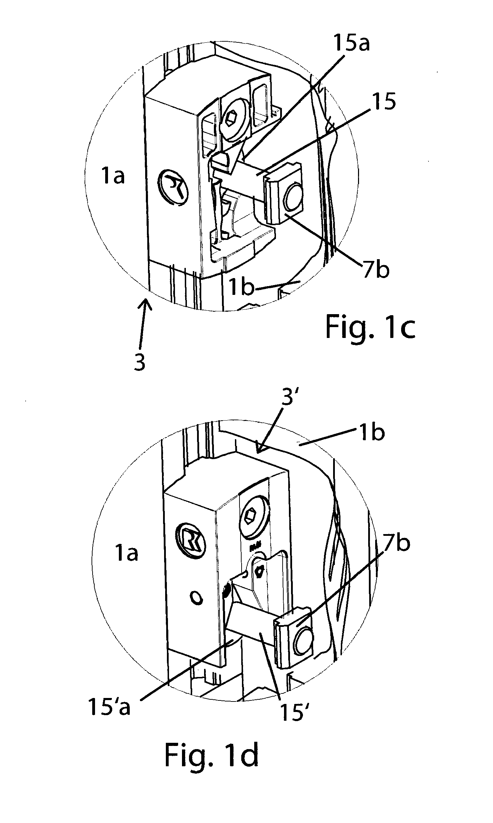

Die Figuren 1c und 1d zeigen die beiden Verbindungselemente 3, 3' im Zustand gemäß Figur 1b in vergrößerter Detaildarstellung, worauf später Bezug genommen werden wird.

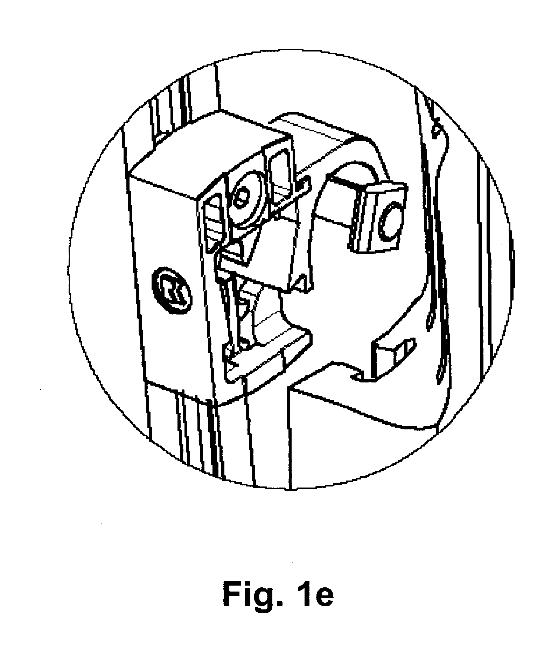

In Figur 1e ist analog zur Darstellung der Figur 1c das einrastende Verbindungselement 3 um ein Zusatzteil 23 ergänzt dargestellt.

Zunächst zeigt Figur 2b - in Längsrichtung 10 betrachtet - wie mittels des Verbindungselementes 3 zwei etwa parallel zueinander verlaufende Konstruktionsprofile 1a, b, die auf den einander zugewandten Seiten jeweils eine in ihrer Längsrichtung 10 verlaufende, hinterschnittene Nut 2a, b zum Befestigen von Anbauteilen aufweisen, mit Hilfe des dazwischengesetzten Verbindungselementes 3 gegeneinander fixiert werden, was anhand der Explosionsdarstellung der Figur 2a besser klar wird.

Der ― in der Regel aus Kunststoff bestehende ― Grundkörper 4 dieses rastenden Verbindungselementes 3 ist zum einen von einer Klemmschraube 5 durchdrungen, deren Schaft in Richtung des einen Konstruktionsprofiles 1a vorsteht und dort in einem Nutenstein 7a eingeschraubt ist, der durch Festziehen der Klemmschraube 5 in der dortigen Nut 2a verklemmt wird.

Damit ist der Grundkörper 4 fest mit seiner einen Anlagefläche 4a an der Außenseite des einen Konstruktionsprofiles 1a anliegend verschraubt.

Im anderen Konstruktionsprofil 1 b ist in der dem Verbindungselement 3 zugewandten Außenseite in der dortigen hinterschnittenen Nut 2b ebenfalls ein Nutenstein 7b verklemmt mit Hilfe einer Einhängeschraube 15, die mit ihrem Schaft und verbreiterten Kopf soweit über die Außenfläche des Konstruktionsprofiles 1 b vorsteht, dass sie ― wie am besten in Figur 1c zu erkennen ― in das einrastende Verbindungselement 3 an ihrem vorstehenden Schacht eingehängt werden kann.

Da die Länge des Schaftes entsprechend bemessen ist, liegt dann die andere Anlagefläche 4b des Grundkörpers 4 im geringen Abstand oder eventuell berührend der Außenfläche dieses Konstruktionsprofiles 1 b gegenüber.

Zu diesem Zweck ist der Grundkörper 4 wie folgt gestaltet:
Wie Figuren 2 und 3 zeigen, ist der Grundkörper 4, der etwa eine Quaderform besitzt, symmetrisch zu seiner Mittelebene 12 ausgebildet, die auf der Mitte zwischen den beiden parallel zueinander verlaufenden Anlageflächen 4a, b verläuft und lotrecht zur Durchgangsrichtung 11 liegt, in der die Klemmschraube 5 und Einhängeschraube 15 durchgesteckt werden und in welcher die entsprechenden später beschriebenen Ausnehmungen durchgängig offen sind.

Die symmetrische Ausbildung dient dazu, um das Verbindungselement 3 mit jeder der beiden Seiten an einem der Konstruktionsprofile 1a, b fest verschrauben zu können.

Im oberen Bereich verfügt der Grundkörper 4 über eine in Durchgangsrichtung 11 durchgehenden Klemmdurchlass 6 zum Hindurchführen der Klemmschraube 5, wobei eine gegenüber der jeweiligen Anlagefläche 4a, b jeweils tiefer liegende Schulter 6a als Anlagefläche für den verbreiterten Kopf 5a der Klemmschraube 5 dient, die dadurch im montierten Zustand mit ihrem Kopf 5a nicht über die entsprechende Anlagefläche z. B. 4b vorsteht, jedoch mit ihrem schaftseitigen Ende gegenüber der anderen Anlagefläche z. B. 4a, da sie dort in den Nutenstein 7 eingeschraubt wird.

Der Klemmdurchlass 6 ist quer zur Durchgangsrichtung 11 vollständig vom Grundkörper 4 umschlossen.

Anders dagegen der darunter angeordnete Einhängedurchlass 16, der - außer in Durchgangsrichtung 11 ― darüber hinaus auch quer zur Durchgangsrichtung 11 hin zu einer Seite, also zu einer der Verbindungsflächen 4c, welche die beiden Anlageflächen 4a, b verbinden und in Längsrichtung 10 liegen, hin offen ist.

In der Umgebung des Einhängedurchlasses 16 ist jede der beiden Anlageflächen 4a, b des Grundkörpers 4 gegenüber dem Rest der Anlagefläche abgesenkt, um Raum für den dort aufzunehmenden verbreiterten Kopf 15a einer Einhängeschraube 15 zu schaffen, der im eingehängten Zustand ebenfalls nicht über die entsprechende Anlagefläche 4a, b vorstehen soll.

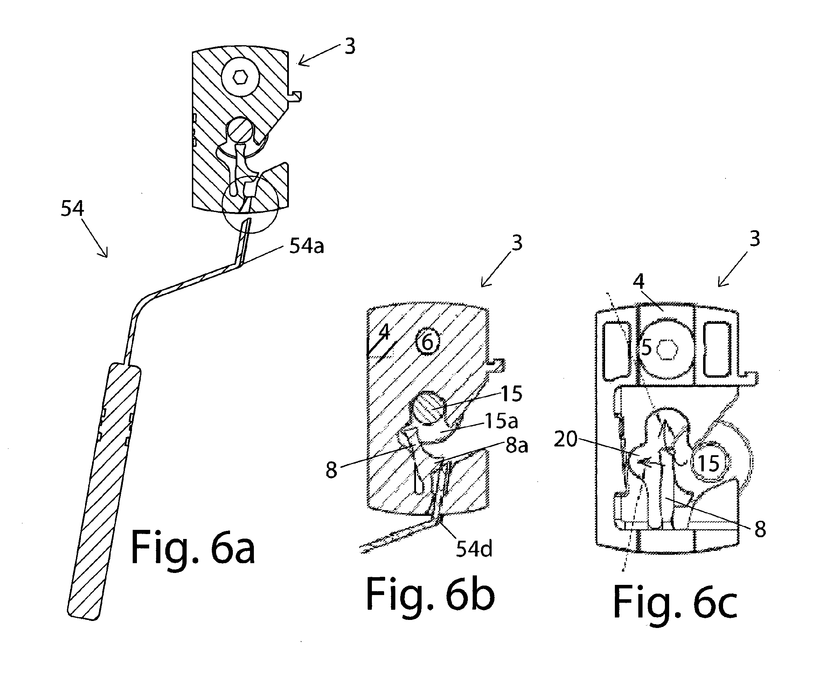

Wie am besten die Ansicht der Figur 3a zeigt, besteht dieser Aufnahmeraum 16 aus mehreren Einzelräumen:
Zum einen aus dem Aufnahmeraum 17 zum Aufnehmen des Schaftes einer Einhängeschraube 15 ― wie in Figur 6b dargestellt ― der nach unten offen ist.

Diese offene Seite 17a steht über einem Führungskanal 14 mit einem trichterförmigen sich nach außen erweiternden Einlaufbereich 18 in Verbindung, dessen konisch zueinander verlaufende Flanken 18a, b in der Seitenfläche 4c münden.

Vom Boden 16a des Einhängedurchlasses 16 ragt ein einstückig mit dem Grundkörper 4 ausgebildeter Riegelzapfen 8 nach oben in Richtung Aufnahmeraum 17, der an seiner Verbindungsstelle zum Rest des Grundkörpers 4 elastisch auf der Mittelebene 12 hin und her gebogen werden kann, also in Figur 3a von links nach rechts und umgekehrt.

Im unbelasteten Zustand ragt der Riegelzapfen 8 mit seiner vorderen Stirnfläche soweit gegen die offene Seite 17a des Aufnahmeraumes 17 vor, dass ein darin aufgenommener Schaft einer Einhängeschraube 15 nicht mehr nach unten aus dem Aufnahmeraum 17 herausbewegt werden kann, sondern dann gegen die freie Stirnfläche des Riegelzapfens 8 stößt und dadurch im Aufnahmeraum 17 verriegelt ist.

Der Riegelzapfen 8 stellt mit seiner Seitenfläche auch eine der seitlichen Begrenzungen des Führungskanals 14 dar.

Im unbelasteten Zustand des Riegelzapfens 14 ist der Führungskanal 14 an seinem Ende, also zwischen dem freien Ende des Riegelzapfens 8 und dem Ende der Wandung des Aufnahmeraumes 17, zu schmal für das Hindurchführen einer Einhängeschraube 15, wie auch anhand der Figur 6c gut zu erkennen ist.

Da der Riegelzapfen 8 jedoch elastisch am Rest des Grundkörpers 4 befestigt ist, weicht er beim Einführen einer Einhängeschraube 15 in Richtung Aufnahmeraum 17 soweit vom Führungskanal 8 in einen hierfür vorhandenen Ausweichraum 20 zurück, der ebenfalls Bestandteil des Einhängedurchlasses 16 ist, dass die Einhängeschraube 15 in den Aufnahmeraum 17 gelangen kann und dann wieder zurück in die verriegelnde Position gemäß Figur 3a federt.

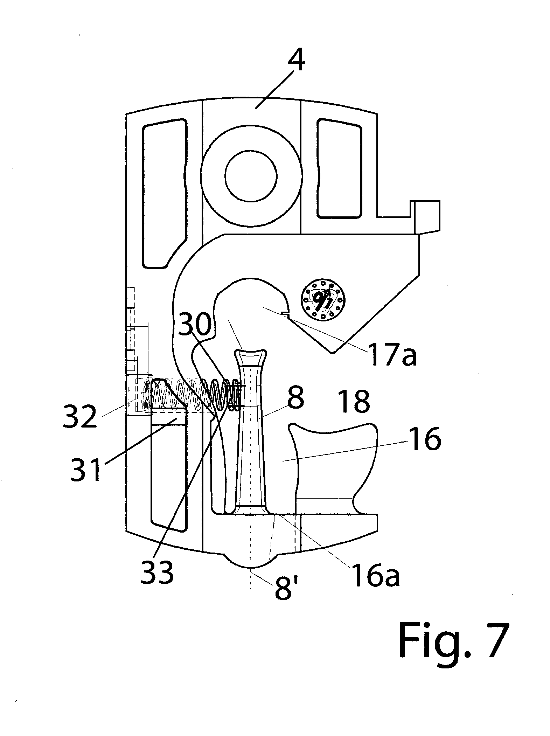

Während bei der Bauform gemäß Figur 3a der Riegelzapfen 8 sich lediglich aufgrund seiner Eigenelastizität nach einer Auslenkung wieder in die Normalstellung, die Riegelstellung, zurückbewegt, zeigt Figur 7 eine Lösung, bei der dies unterstützt wird durch eine separate Rückstellfeder 30, die auf der vom Einlass 18 abgewandten Seite des Riegelzapfens gegen den Riegelzapfen drückt und die sich am Grundkörper 4 abstützt.

Die Rückstellfeder 30 greift nahe des freien Endes am Riegelzapfen 8 an, um einen möglichst langen Hebelarm des Riegelzapfens zu gewährleisten.

Die Rückstellfeder 30 ist als helixförmige Spiralfeder ausgebildet und sitzt mit ihrem rückwärtigen, vom Riegelzapfen 8 abgewandten Ende in einer Durchgangsöffnung 31, durch die die Rückstellfeder 30 in Querrichtung geführt wird und durch die hindurch sie vor allem von der Außenseite des Grundkörpers 4 her auch eingesetzt, also montiert und demontiert, werden kann.

Um die Abstützung der Rückstellfeder 30 zu gewährleisten, wird anschließend als Anschlag ein Klemmstopfen 32 in die Durchgangsöffnung 31 eingepresst.

Wie Figur 7 ferner zeigt, wird der Riegelzapfen 8 durch die Rückstellfeder 30 in der Riegelstellung gehalten und auch nicht zuweit in Richtung Einlass verlagert, so dass die Riegelfunktion für eine in dem Aufnahmeraum 17 befindlichen Schaft einer Schraube nach wie vor gegeben ist.

Die Kraft der Rückstellfeder 30 und die Eigenelastizität des Riegelzapfens 8, insbesondere dessen Abmessungen hinsichtlich Querschnitt und Länge, müssen entsprechend dimensioniert werden.

Figur 1c zeigt den Schaft einer Einhängeschraube 15, die sich gerade im Einlauf 18 befindet.

Um eine im Aufnahmeraum 17 befindliche Einhängeschraube 15 von dort wieder entnehmen und das Verbindungselement 3 von der Einhängeschraube 15 entfernen zu können, weist das Verbindungselement 3 eine Entriegelungsmöglichkeit auf:
In dem Boden des Einhängedurchlasses 16 neben dem Riegelzapfen 8 auf der Seite zum Einlauf 18 hin mündet eine Entriegelungsöffnung 13, die den Grundkörper 4 von dort bis zu seiner unteren Stirnfläche 4e durchdringt.
Diese Entriegelungsöffnung 13 zielt auf eine Lücke 19 in der unteren Wandung des Führungskanals 14, die zwischen der unteren Schrägfläche 18b des Einlaufes 18 und einem vom Riegelzapfen 8 in Richtung dieser Schrägfläche 18b weisenden Fortsatz 8a besteht.

Der Querschnitt der Entriegelungsöffnung 13 ist jedoch größer als die Breite der Lücke 19 gemessen in Richtung der Mittelebene 12.

Deshalb kann ein Entriegelungswerkzeug 54 mit einem entsprechend geformten, schlanken Schaft 54a, der vorzugsweise doppelt gekröpft ist ― wie in Figur 1a ersichtlich ― mit dem vorderen, geraden Ende dieses Schaftes 54a von unten durch die Entriegelungsöffnung 13 bis in die Lücke 19 hinein vorwärts geschoben werden, wodurch die Breite dieser Lücke 19 vergrößert wird ― wie in Figur 6b ersichtlich ― und dadurch der gesamte Riegelzapfen 8 in den Ausweichraum 20 verschwenkt wird.

Dadurch ist der Führungskanal 14 wieder auf einer solchen Breite offen, dass der eingehängte Schaft einer Einhängeschraube 15 aus dem Aufnahmeraum 17 über den Führungskanal 14 und den Einlauf 18 aus dem Verbindungselement 3 herausgeführt werden kann.

Damit das Entriegeln des Verbindungselementes 3 nicht jedermann mit einfachsten Werkzeugen wie etwa einen Schraubenzieher möglich ist, besitzt die Entriegelungsöffnung 13 ― und entsprechend auch das vorderen Ende des Schaftes 54a des Entriegelungswerkzeuges 54 ― einen Querschnitt, der keine zwei parallel zueinander verlaufenden Hauptflächen wie bei einem beliebigen Flachmaterial aufweist, sondern einen ringsegmentförmigen Querschnitt, wie am besten in der Ansicht des Grundkörpers 4 von unten auf die untere Stirnfläche 4e gemäß Figur 3c ersichtlich ist.

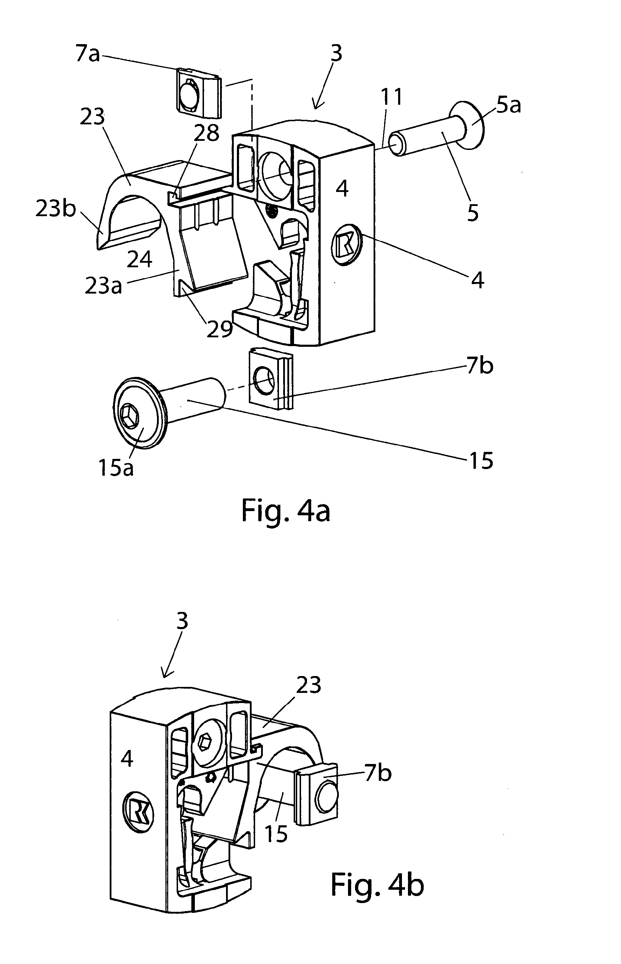

Sofern jedoch auf diese Art und Weise eine Einhängeschraube 15 nicht sofort im Aufnahmeraum 17 des einrastenden Verbindungselementes 3 verriegelt aufgenommen werden soll, sondern zunächst nur provisorisch das einrastende Verbindungselement 3 ― und somit nicht verrastend ― an einer Einhängeschraube 15 gehalten werden soll, kann hierfür gemäß den Figuren 4 am Grundkörper 4 zunächst ein Zusatzteil 23 befestigt werden, welches vorzugsweise ebenfalls aus Kunststoff besteht.

Dieses Zusatzteil 23 besitzt ― in Durchgangsrichtung 11 betrachtet ― die Form eines umgedrehten Hakens mit einer somit nach unten offenen Einhängebucht 24, die vom Querschnitt her groß genug ist, um darin den Schaft einer Einhängeschraube 15 aufzunehmen.

Das Zusatzteil 23 besitzt somit zwei frei endende Schenkel 23a, b, von denen der eine länger ausgebildet ist als der andere und der Befestigung am Grundkörper 4 des Verbindungselementes 3 dient.

Hierzu besitzt der Grundkörper 4 oberhalb des Einlaufes 18 eine über die Seitenfläche 4c vorstehende Nase 27, die sich über die gesamte Tiefe des Grundkörpers 4, also die Breite der Verbindungsfläche, erstreckt.

Im oberen Bereich der Außenfläche des längeren Schenkels 23a des Zusatzteiles 23 ist eine entsprechend geformte, hinterschnittene Nut 28 angeordnet, in die die Nase 27 in Durchgangsrichtung 11 eingeschoben werden kann.

Gleichzeitig ist in der freien unteren Stirnfläche dieses längeren Schenkels 23 ein spitzwinkliger Innenwinkel 29 an einer solchen Stelle ausgebildet, dass beim Einschieben der Nase 27 in die Nut 28 die in der Aufsicht der Figur 3a am besten sichtbare Ecke zwischen der Verbindungsfläche 4c und der unteren Flanke 18b des Einlaufes 18 in diesen Innenwinkel 29 einfährt, wodurch quer zur Durchgangsrichtung 11 das Zusatzteil 23 formschlüssig am Grundkörper 4 des Verbindungselementes 3 verrastet wird und gleichzeitig der Einlauf 18 des Grundkörpers 4 durch den längeren Schenkel 23a des Zusatzteiles 23 verschlossen wird, wie am besten in Figur 4b ersichtlich.

Mit einem solchen montierten Zusatzteil 23 außen am Verbindungselement 3 ist es nun möglich, dieses Verbindungselement 3 vorerst lediglich mit seinem Zusatzteil 23 an einer vorstehenden Einhängeschraube 15 einzuhängen und damit von dieser sehr schnell und ohne kompliziertes Lösen einer Verriegelung abzunehmen.

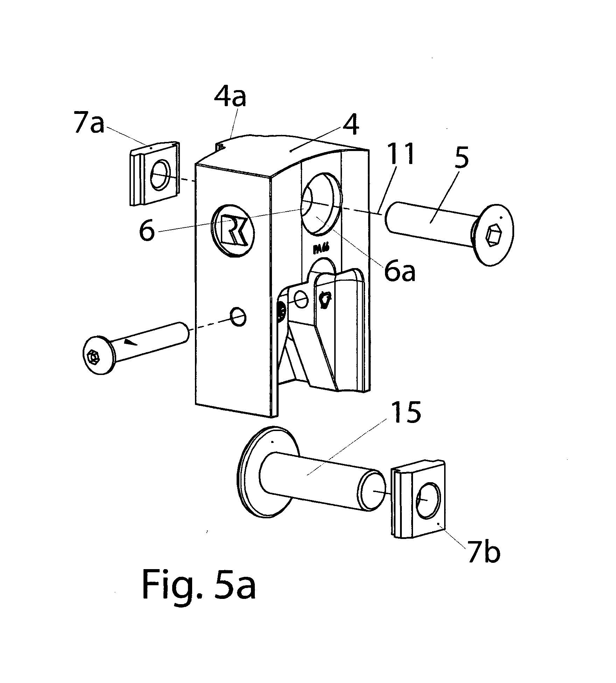

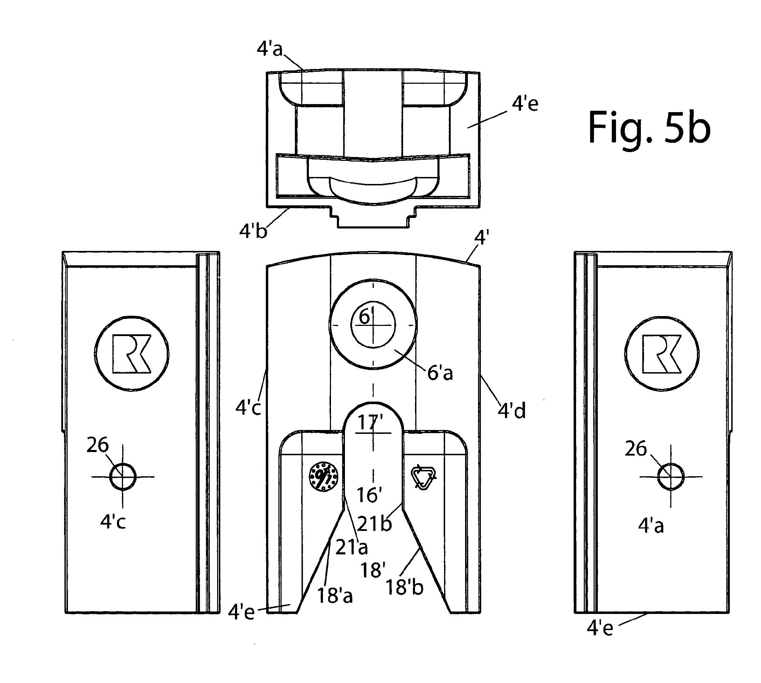

Die Figuren 5 zeigen das in den Figuren 1a und 1b am unteren Befestigungspunkt eingesetzte, nicht einrastende Verbindungselement 3' in perspektivischer Darstellung sowie in Einzelansichten:
Auch dieses Verbindungselement 3' besitzt im oberen Bereich eine in Durchgangsrichtung 11, also von einer Anlagefläche 4'a zur anderen Anlagefläche 4'b, offenen Klemmdurchlass 6' zur Aufnahme einer entsprechenden Klemmschraube 5', wiederum mit von beiden Seiten her abgesenkter Schulter 6'a zur versenkten Aufnahme des Kopfes 5'a einer Klemmschraube 5'.
Darunter verfügt auch das nicht rastende Verbindungselement 3' über einen Einhängedurchlass 16' mit einem darin integrierten Aufnahmeraum 17' für den Schaft einer Einhängeschraube 15', jedoch fehlt hier zum einen die Verriegelung und zum anderen ist der Einhängedurchlass 16' nicht zur Seite, sondern zur unteren Stirnfläche 4'e hin offen.

Auch hier erweitert sich der Einlauf 18' dieses Einhängedurchlasses 16' zur offenen Seite hin, begrenzt durch die aufeinander zulaufenden Schrägflächen 18'a, b.

Zwischen dem einseitig nach unten offenen Aufnahmeraum 17' und dem konischen Einlauf 18' wird der Aufnahmeraum 16' jedoch begrenzt durch zwei parallel verlaufende Flanken 21 a, b, deren Abstand etwas größer ist als der Durchmesser des Schaftes einer dadurch zum Aufnahmeraum 17' einzuführenden Einhängeschraube 15'.

Die Flanken 21a, b verlaufen somit parallel zu den Verbindungsflächen 4'c, d.

Somit kann dieses nicht rastende Verbindungselement 3' ― wie in den Figuren 1a und 1b ersichtlich ― einfach von oben auf den vorstehenden Schaft einer Einhängeschraube 15' aufgeschoben werden.

Wenn sich die Einhängeschraube 15' im Aufnahmeraum 17' befindet, kann das Verbindungselement 3' auch um die Längsachse der Einhängeschraube 15' gedreht werden, wodurch das Wegklappen oder Heranklappen des oberen Verbindungselementes gemäß Figur 1a oder 1b an den Pfosten 51 quer zur Ebene des Gitterfeldes 52 möglich wird.

Um das obere, einrastende Verbindungselement 3 einrasten und ausrasten zu können, wofür eine begrenzte Bewegung in Längsrichtung 10 des Profiles, also des Pfostens 51, notwendig ist, besitzen die parallel zueinander verlaufenden Flanken 21a, b des nicht rastenden Verbindungselementes 3' eine Länge, die mindestens dem Abstand beim rastenden Verbindungselements von dessen Aufnahmeraum 17 bis zur unteren Schrägfläche 18b entspricht.

Damit eine im nicht rastenden Verbindungselement 3' eingehängte Einhängeschraube 15' mit ihrem Kopf 15'a nicht über eine der Anlageflächen 4'a bzw. 4'b vorsteht, ist auch hier die Umgebung des Einhängedurchlasses 16' gegenüber der Anlagefläche 4'a bzw. 4'b abgesenkt.

Um für spezielle Anwendungen dennoch eine im Aufnahmeraum 17' aufgenommenen Sicherungsschraube 15' fixieren zu können, verläuft unterhalb des Aufnahmeraumes 17' eine Gewindebohrung 26 durch diesen Grundkörper 4' mit Mündung in beiden Verbindungsflächen 4'c,d, so dass von jeder beliebigen Seite eine Sicherungsschraube 25 eingeschraubt werden kann, die dann den Einhängedurchlass 16' durchläuft und ein Herausbewegen der Einhängeschraube 15' nach unten aus dem Aufnahmeraum 17' heraus verhindert.

### BEZUGSZEICHENLISTE

- 1a, b: Konstruktionsprofil
- 2a, b: Nut
- 3,: einrastendes Verbindungselement
- 3': nicht einrastendes Verbindungselement
- 4, 4': Grundkörper
- 4a, b, 4'a,b: Anlagefläche
- 4c, d: Verbindungsfläche
- 4'c, d: Verbindungsfläche
- 4e, f, 4'e, f: Stirnfläche
- 5, 5': Klemmschraube
- 5a, 5'a: Kopf
- 6, 6': Klemmdurchlass
- 6a, 6'a: Schulter
- 7a, b: Nutenstein
- 8: Riegelzapfen
- 8': Verlaufsrichtung
- 8a: Fortsatz
- 10, 10': Längsrichtung
- 11, 11': Durchgangsrichtung
- 12: Mittelebene
- 13: Entriegelungsöffnung
- 14: Führungskanal
- 15, 15': Einhängeschraube
- 15a, 15': Kopf
- 16, 16': Einhängedurchlass
- 16a: Boden
- 17, 17': Aufnahmeraum
- 17a, 17'a: offene Seite
- 18, 18',: Einlauf
- 18'a, b: Schrägfläche
- 18a, b: Schrägfläche
- 19: Lücke
- 20: Ausweichraum
- 21a, b: Flanke
- 22: Zentriervorsprung
- 23: Zusatzteil
- 23a, b: Schenkel
- 24: Einhängebucht
- 25: Sicherungsschranke
- 26: Gewindebohrung
- 27: Nase
- 28: Nut
- 29: Innenwinkel
- 30: Rückstellfeder
- 31: Gewindepfropfen
- 32: Klemmstopfen
- 33: Führungserhebung

- 50: Schutzgitter
- 51: Pfosten
- 52: Gitterfeld
- 53: Rahmen
- 54: Entriegelungswerkzeug
- 54a: Schaft

## Patentansprüche

1. Verbindungsvorrichtung zum Verbinden von zwei Konstruktionsprofilen (1 a, b), die hinterschnittene Nuten (2a, b) auf ihrer Außenseite aufweisen, etwa parallel nebeneinander mit
einem einrastenden Verbindungselement (3), welches umfasst
- einen Grundkörper (4) mit zwei einander gegenüberliegenden Anlageflächen (4a, b) und zwei die Anlageflächen auf jeder Seite verbindenden Verbindungsflächen (4c, d), wobei die Kanten zwischen Anlageflächen und Verbindungsflächen eine Längsrichtung (10) definieren.
- einem Klemmdurchlass (6), der den Grundkörper (4) von der einen zur anderen Anlagefläche (4a, b) in Durchgangsrichtung (11) durchdringt,
- einer Klemmschraube (5), die durch den Klemmdurchlass (6) durchgesteckt ist, sich mit ihrem verbreiterten Kopf (5a) an einer Schulter (6a) im Klemmdurchlass (6) abstützt und mit ihrem freien Ende aus einer Anlagefläche (4a) des Grundkörpers (4) vorsteht und in einen Nutenstein (7) eingeschraubt ist,
- einem zu einer der Verbindungsflächen (4c, d) hin als Einlasse (18) offenen Einhängedurchlass (16) mit einem Aufnahmeraum (17) mit quer zu seiner Durchgangsrichtung hin (11) offenen Seite (17a), zur Aufnahme eines in Durchgangsrichtung (11) verlaufenden Schafts einer Einhängeschraube (15),
- einem am Grundkörper (4) angeordneten beweglichen Riegelzapfen (8), der in seiner Riegelstellung die offene Seite (17a) des Aufnahmeraumes (17) so weit verschließt, dass der Schaft einer Einhängeschraube (15) nicht aus dem Aufnahmeraum (17) durch die offene Seite (17a) entfernt werden kann und
- einer Öffnungsvorrichtung zum Bewegen des Riegelzapfens (8) in eine Offenstellung
**dadurch gekennzeichnet, dass**
der Riegelzapfen (8) mittel eines vom Riegelzapfen (8) separaten Spannelementes in die Riegelstellung vorgespannt ist.

2. Verbindungsvorrichtung nach Anspruch 1,
**dadurch gekennzeichnet, dass**
- der Grundkörper (4) mittensymmetrisch zur Mittelebene (12) ausgebildet ist, die in der Mitte zwischen den beiden Anlageflächen (4a, b) liegt, und/oder
- die Anlageflächen (4a, b) in der Umgebung des Aufnahmeraumes (17) zur Mittelebene (12) hin zurückversetzt sind und insbesondere in diesem Bereich der Grundkörper (4) in Durchgangsrichtung (11) gemessen, maximal 50%, besser maximal 35% der in Durchgangsrichtung (11) gemessenen Dicke des gesamten Grundkörpers (4) besitzt.

3. Verbindungsvorrichtung nach einem der vorherigen Ansprüche,
**dadurch gekennzeichnet, dass**
- der Riegelzapfen (8) einstückig zusammen mit den Grundkörper (4) ausgebildet ist, und gegenüber dem Grundkörper (4) elastisch verbiegbar wenigstens in Richtung einer Ebene parallel zu den Anlageflächen (4a, b) ist, und/oder
- der Riegelzapfen (8) von der dem Aufnahmeraum (17) gegenüberliegenden Seite des Einhängedurchlasses (16) aus in den Einhängedurchlass (16) vorsteht.

4. Verbindungsvorrichtung nach einem der vorherigen Ansprüche,
**dadurch gekennzeichnet, dass**
- sich der Einhängedurchlass (16) auf der vom Aufnahmeraum (17) gegenüber liegenden Seite soweit weg erstreckt, dass der Boden (16a) des Einhängedurchlasses (16) vom Aufnahmeraum (17) um mindestens den doppelten Durchmesser des Aufnahmeraumes (17) entfernt ist, und/oder
- der Einhängedurchlass (16) einen trichterförmigen Einlaufbereich (18) aufweist, der von zwei schräg zueinander verlaufenden Schrägflächen (18a, b) gebildet wird, und/oder
- von dem trichterförmigen Einlauf (18) in den Aufnahmeraum (17) ein Führungskanal (14) verläuft, der auf einer Seite von dem Riegelzapfen (8) begrenzt wird.

5. Verbindungsvorrichtung nach einem der vorherigen Ansprüche,
**dadurch gekennzeichnet, dass**
- der Riegelzapfen (8) vom Boden (16a) des Einhängedurchlasses (16) aus abragt, und/oder
- das Spannelement ein elastisches Element, insbesondere eine Rückstellfeder (30), ist, mit einer Kraftangriffsrichtung quer zur Verlaufsrichtung (8') des Riegelzapfens (8) und parallel zu den Anlageflächen (4a, b).

6. Verbindungsvorrichtung nach einem der vorherigen Ansprüche,
**dadurch gekennzeichnet, dass**
- das Spannelement, insbesondere die Rückstellfeder (30), auf der vom Einlass (18) des Einhängedurchlasses (18) abgewandten Seite am Riegelzapfen (8) angreift, und/oder
- das Spannelement, insbesondere die Rückstellfeder (30), sich einerseits am Riegelzapfen (8), insbesondere nahe dessen freien Ende, und andererseits am Grundkörper (4) abstützt.

7. Verbindungsvorrichtung nach einem der vorherigen Ansprüche,
**dadurch gekennzeichnet, dass**
- das Spannelement, insbesondere die Rückstellfeder (30), mit dem vom Riegelzapfen (8) abgewandten Ende in einer Vertiefung des Grundkörpers (4) geführt ist und die Vertiefung insbesondere eine Durchgangsöffnung (31) ist und in ihrem vom Riegelzapfen (8) abgewandten Endbereich einen von der Außenseite des Grundkörpers (4) her montierbaren und demontierbaren Anschlag für das Spannelement aufweist, und insbesondere
- der Anschlag mittels Klemmkraft, Gewinde oder Bajonett-Verschluss im Innenumfang der Vertiefung, insbesondere Durchgangsöffnung (31) fixierbar ist.

8. Verbindungsvorrichtung nach einem der vorherigen Ansprüche,
**dadurch gekennzeichnet, dass**
- der Schraubanschlag (32) im montierten Zustand nicht über die Außenkontur des Grundkörpers (4) in Form der dortigen Verbindungsfläche (4b) vorsteht, und/oder
- die durch das Spannelement auf den Riegelzapfen (8) aufgebrachte Kraft so bemessen ist, dass sie den Riegelzapfen (8) in der Riegelstellung hält bzw. in diese zurückstellt, aber nicht darüber hinaus in Richtung des Einlasses (18) des Einhängedurchlasses (16a) verformt.

9. Verbindungsvorrichtung nach einem der vorherigen Ansprüche,
**dadurch gekennzeichnet, dass**
- auf der dem Spannelement zugewandten Kontaktstelle des Riegelzapfens (8) auf dem Riegelzapfen (8) eine formschlüssige Oberflächengestaltung, insbesondere eine Führungserhebung (33), vorhanden ist, und/oder
- die Öffnungsvorrichtung einen Entriegelungsdurchlass (13) im Grundkörper (4) umfasst, der auf eine Lücke (19) zwischen dem Riegelzapfen (8) und dem Einlauf (18) gerichtet ist und der Einhängedurchlass (16) auf der von der Lücke (19) gegenüberliegenden Seite des Riegelzapfens (8) einen Ausweichraum (20) umfasst für das Verlagern des Riegelzapfens (8) in die Offenstellung.

10. Verbindungsvorrichtung nach einem der vorherigen Ansprüche,
**dadurch gekennzeichnet, dass**
- der Riegelzapfen (8) einen zur Lücke (19) hinweisenden Fortsatz (8a) aufweist, dessen eine Flanke den Führungskanal (14) bildet, und dessen Spitze gegen die Lücke (19) ragt, und/oder
- die Entriegelungsöffnung (13) einen mit rechteckigen, insbesondere bogenförmigen Querschnitt besitzt und sich insbesondere trichterförmig von außen nach innen verjüngt.

11. Verbindungsvorrichtung nach einem der vorherigen Ansprüche,
**dadurch gekennzeichnet, dass**
- das Verbindungselement (3) ein Zusatzteil (23) als Montagehilfe umfasst, welches auf der Verbindungsfläche (4c) mit der offenen Seite (17a) des Aufnahmeraumes (17) befestigbar ist und eine nach unten offene Einhängebucht (24) für das Einhängen des Schaftes einer Einhängeschraube (15) aufweist, die in Durchgangsrichtung (11) durchgeht und insbesondere
- das Zusatzteil (23) am Grundkörper (4) befestigbar ist durch Einschieben in Durchgangsrichtung (11).

12. Verbindungsvorrichtung nach einem der vorherigen Ansprüche,
**dadurch gekennzeichnet, dass**
- im montierten Zustand des Zusatzteiles (23) am Verbindungselement (3) das Zusatzteil (23) den Einlauf (18) des Einhängedurchlasses (16) verschließt und das Zusatzteil (23) sich zum Großteil außerhalb des Grundkörpers (4) befindet, und/oder
- im montierten Zustand des Zusatzteiles (23) am Verbindungselement (3) das Zusatzteil (23) formschlüssig, insbesondere sowohl oberhalb als auch unterhalb des Einlaufes (18), am Grundkörper (4) des Verbindungselementes (3) befestigt ist.

13. Verbindungsvorrichtung nach einem der vorhergehenden Ansprüche, wobei die Verbindungsvorrichtung ein nichtrastendes Verbindungselement (3') umfasst, mit
- einem Grundkörper (4) mit zwei einander gegenüberliegenden Anlageflächen (4a, b) und zwei die Anlageflächen auf jeder Seite verbindenden Verbindungsflächen (4c, d),
- einem Klemmdurchlass (6), der den Grundkörper (4) von der einen zur anderen Anlagefläche (4a, b) in Durchgangsrichtung (11) durchdringt,
- einer Klemmschraube (5), die durch den Klemmdurchlass (6) durchgesteckt ist, sich mit ihrem verbreiterten Kopf (5a) an einer Schulter (6a) im Klemmdurchlass (6) abstützt und mit ihrem freien Ende aus einer Anlagefläche (4a) des Grundkörpers (4) vorsteht und in einen Nutenstein (7) eingeschraubt ist,
**gekennzeichnet durch**
- einen zu einer der Stirnflächen (4e, f) hin offenen Einhängedurchlass (16') mit einem Aufnahmeraum (17') zur Aufnahme des Schafts einer Einhängeschraube (15'),
- wobei der Aufnahmeraum (17') quer zu seiner Durchgangsrichtung (11) eine offene Seite (17'a) aufweist.

14. Verbindungsvorrichtung nach einem der vorgehenden Ansprüche, **dadurch gekennzeichnet, dass**
- der Aufnahmeraum (17') einen konischen Einlauf (18') an der offenen Seite (17' a) aufweist und zwei Flanken (21a, b) zwischen dem konischen Einlauf (18') und dem Aufnahmeraum (17') parallel zueinander verlaufen, und/oder
- die Länge der Flanken (21a, b) mindestens so groß ist wie bei dem rastbaren Verbindungselement (3), der Abstand vom Aufnahmeraum (17) zum schmalsten Punkt des konischen Einlaufes (18).

15. Verbindungsvorrichtung nach einem der vorgehenden Ansprüche, **dadurch gekennzeichnet, dass**
- an den Anlageflächen 4a,b über wenigstens einen Teil der Länge in Längsrichtung (10) verlaufend je ein Zentriervorsprung (22a,b) ausgebildet ist, der in die Nut (2a,b) des Konstruktionsprofiles (1a,b) passt, und/oder
- unter dem Aufnahmeraum (17') quer zur Durchgangsrichtung (11') eine Gewindebohrung (26) im Grundkörper (4') angeordnet ist zum Einschrauben einer Sicherungsschraube 25, die den Einhängedurchlass (16') durchläuft.

16. Schutzgitter (50) bestehend aus
- am Boden oder an der Decke montierten, zueinander beabstandeten Pfosten (51) in Form eines Konstruktionsprofiles (1a) und
- dazwischen befestigten Gitterfeldern (52) mit einem außen umlaufenden Rahmen (53), dessen parallel zu den Pfosten (51) verlaufende Schenkel Konstruktionsprofile (1 b) sind und
- einer Verbindungsvorrichtung gemäß einem der vorhergehenden Ansprüche zwischen den Pfosten (51) und den dazu parallel laufenden Schenkeln der Rahmen (53).

17. Schutzgitter (50) nach Anspruch 16,
**dadurch gekennzeichnet, dass**
die rastenden Verbindungselemente (3) mit ihrer offenen Verbindungsfläche (4c) zur abzusperrenden Fläche hin montiert sind.

## Claims

1. A connecting device for connecting two structural profiles (1a,b) including undercut grooves (2a,b) at their outsides substantially parallel and adjacent to one another and including an interlocking connecting element (3), comprising:
- a base element (4) with two contact surfaces (4a, b) arranged opposite to one another and two connecting surfaces (4c,d) connecting the contact surfaces on each side, wherein edges between contact surfaces and connection surfaces define a longitudinal direction (10);
- a clamping pass through (6) which penetrates the base element (4) from one contact surface (4a,b) to another contact surface (4a,b) in pass through direction (11);
- a clamping bolt (5) which is inserted through the clamping pass through (6) and supported with its broadened head (5a) at a shoulder (6a) in the clamping pass through (6) and which protrudes with its free end from a contact surface (4a) of the base element (4) and is threaded into a sliding block (7);
- an engagement pass through (16) that is open as an inlet (18) towards one of the connection surfaces (4c,d) and includes a receiver cavity (17) with a side (17a) that is open transversal to a pass through direction (11) for receiving a shaft of an engagement bolt (15) extending in pass through direction (11);
- a moveable locking pin (8) arranged at the base element (4) wherein the locking pin in its locking position closes the open side (17a) of the receiving cavity (17) far enough so that a shaft of an engagement bolt (15) cannot be removed from the receiving cavity (17) from the open side (17a); and
- an opening device for moving the locking pin (8) into an open position,
**characterized in that**,
the locking pin (8) is preloaded into the locking position through a clamping element that is separate from the locking pin (8).

2. The connecting device according to claim 1,
**characterized in that**
- the base element (4) is configured center symmetrical to a center plane (12) which is arranged in a center between the two contact surfaces (4a, b) and/or
- the contact surfaces (4a, b) are set backward towards the center plane (12) proximal to the receiving cavity (17) and in particular in this portion the base element (4) measured in pass through direction (11) has at the most 50%, better at the most 35% of a thickness of the entire base element (4) measured in the pass through direction (11).

3. The connecting device according to one of the preceding claims,
**characterized in that**
- the locking pin (8) is configured integral with the base element (4) and configured elastically bendable relative to the base element (4) at least in a direction of a plane parallel to the contact surfaces (4a,b), and/or
- the locking pin (8) protrudes from the side of the engagement pass through (16) opposite to the receiving cavity (17) into the engagement pass through (16).

4. The connecting device according to one of the preceding claims,
**characterized in that**
- the insertion pass through (16) on a side opposite to the receiving cavity (17) extends far enough so that the base (16a) of the engagement pass through (16) has at least a distance from the receiving cavity (17) which corresponds to twice the diameter of the receiving cavity (17) and/or
- the engagement pass through (16) includes a funnel shaped inlet portion (18) which is formed by two slanted surfaces (18a,b) that extend at a slant angle relative to one another and/or
- a guide channel (14) extends from the funnel shaped inlets (18) into the receiving cavity (17), wherein the guide channel is defined on one side by the locking pin (8)

5. The connecting device according to one of the preceding claims, **characterized in that**
- the locking pin (8) protrudes from the base (16a) of the engagement pass-through (16) and/or
- the clamping element is an elastic element, in particular a return spring (30), with a load application direction transversal to the extension (8') of the locking pin (8) and parallel to the contact surfaces (4a,b).

6. The connecting device according to one of the preceding claims, **characterized in that**
- the clamping element, in particular the return spring (30), engages the side of the locking pin oriented away from the inlet (18) of the engagement pass-through (16) and/or
- the clamping element, in particular the return spring (30), is supported on one side at the locking pin (8), in particular proximal to the free end of the locking pin (8), and on the other side at the base element (4).

7. The connecting device according to one of the preceding claims, **characterized in that**
- the clamping element, in particular the return spring (30), is supported with its end oriented away from the locking pin (8) in a recess of the base element (4) which recess is in particular a pass through opening (31) and includes a stop for the clamping element at its end portion oriented away from the locking pin (8), which stop can be mounted and dismounted from the outside of the base element (4), and in particular
- the stop is fixable through a clamping force, a thread or a bayonet coupling in the inner circumference of the recessed portion, in particular the passage opening (31).

8. The connecting device according to one of the preceding claims,
**characterized in that**
- the bolt stop (32) does not protrude in its assembled state over an outer contour of the base element (4), wherein the outer contour is configured as the connecting surface (4b), and/or
- the force applied by the clamping element on the locking pin (8) is sized, so that it holds the locking pin (8) in the locking position or moves the locking pin (8) back into the locking position, but the force is not sized so that it deforms the locking pin (8) further in a direction towards the inlet (18) of the engagement pass-through (16a).

9. The connecting device according to one of the preceding claims,
**characterized in that**,
- a form-locking surface configuration, in particular a guide protrusion (33), is provided on the locking pin (8) at the contact point of the locking pin (8), wherein the contact point is oriented towards the clamping element, and/or
- the opening device includes and unlocking pass through (13) in the base element (4), wherein the unlocking pass-through is oriented towards a gap (19) between the locking pin (8) and the inlet (18), and the engagement pass-through (16) includes a secondary space (20) for moving the locking pin (8) into the open position on a side of the locking pin (8) arranged opposite to the gap (19).

10. The connecting device according to one of the preceding claims,
**characterized in that**,
- the locking pin (8) includes a protrusion (8a) which is oriented towards the gap (19), wherein one flank of the protrusion (8a) forms the guide channel (14) and wherein a point of the protrusion (8a) extends towards the gap (19), and/or
- the unlocking opening (13) has a rectangular, in particular arcuate cross section and tapers in particular from an outside inward.

11. The connecting device according to one of the preceding claims,
**characterized in that**,
- the connecting element (3) includes an additional component (23) configured as an assembly aid which is attachable at the connecting surface (4c) with an open side (17a) of the receiving cavity (17) and includes an engagement recess (24) that is open in downward direction for engaging a shaft of an engagement bolt (15) that extends in pass through direction (11) and in particular,
- the additional component (23) is attachable at the base element (4) through insertion in pass through direction (11).

12. The connecting device according to one of the preceding claims,
**characterized in that**,
- the additional component (23) closes the inlet (18) of the engagement pass through (16) in assembled condition of the additional component (23) at the connecting element (3) and the additional component (23) is arranged largely outside the base element (4), and/or
- the additional component (23) is attached in assembled condition at the base element (4) of the connecting element (3) in a form-locking manner in particular above the inlet (18) and also below the inlet (18).

13. The connecting device according to one of the preceding claims, wherein the connecting device includes a non-interlocking connecting element (3'), comprising:
- a base element (4) with two contact surfaces (4a,b) arranged opposite to one another and two connecting surfaces (4c,d) connecting the contact surfaces on each side,
- a clamping pass through (6) which penetrates the base element (4) from one contact surface (4a,b) to another in pass-through direction (11),
- a clamping screw (5) which is inserted through the clamping pass-through (6), supported with its broadened head (5a) at a shoulder (6a) in the clamping pass-through (6) and protrudes with its free end from a contact surface (4a) of the base element (4) and which is threaded into a sliding block (7),
**characterized by**
- an engagement pass-through (16') with a receiving cavity (17') for receiving a shaft of an engagement bolt (15'), wherein the engagement pass-through (16') is open towards one of the faces (4e, f),
- wherein the receiving cavity (17') includes a side (17'a) that is open transversal to the pass-through direction (11) of the receiving cavity.

14. The connecting device according to one of the preceding claims,
**characterized in that**,
- the receiving cavity (17') includes a conical inlet (18') at the open side (17'a) and two flanks (21 a, b) run parallel to one another between the conical inlet (18') and the receiving cavity (17'), and/or
- a length of the flanks (21 a, b) is at least as long as a distance from the receiving cavity (17) to the narrowest point of the funnel shaped inlet (18) at the interlockable connecting element (3).

15. The connecting device according to one of the preceding claims,
**characterized in that**
- a respective centering protrusion (22a, b) extending over at least a portion of the length in longitudinal direction (10) is configured at the contact surfaces (4a, b), wherein the centering protrusion (22a, b) fits in the groove (2a, b) of the structural profile (1a, b),
and/or
- a threaded bore (26) is arranged in the base element (4') below the receiving cavity (17') and transversal to the pass-through direction (11') for threading in a safety bolt (25) which runs through the engagement pass-through (16').

16. Safety grids (50), comprising:
- rods (51) mounted at the floor or ceiling, offset from one another and configured as a structural profiles (1 a), and
- grid fields (52) attached between the rods (51) and having an outer circumferential frame (53) whose arms extending parallel to the rods (51) are structural profiles (1b), and
- a connecting device according to one of the preceding claims between the rods (51) and the arms of the frames (53), wherein the arms of the frames (53) extend parallel to the rods (51).

17. Safety grids (50) according to claim 16,
**characterized in that**,
the interlocking connecting elements (3) are mounted with their open connecting surface (4c) towards the surface that is to be blocked.

## Revendications

1. Dispositif de raccordement pour le raccordement de deux profilés de construction (1a, b) qui comportent des rainures en contre-dépouille (2a, b) sur leur face externe, à peu près parallèlement les uns aux autres avec un élément de raccordement (3), comprenant
- un corps de base (4) ayant deux surfaces d'appui opposées (4a, b) et deux surfaces reliant les surfaces de contact de chaque côté de surfaces d'articulation (4c, d), dans lequel les bords entre les surfaces de contact et les surfaces de liaison définissent une direction longitudinale (10).
- un passage de serrage (6) qui traverse le corps de base (4) de l'une à l'autre surface d'appui (4a, b) dans la direction de passage (11) pour le logement d'une tige d'une vis d'accrochage, laquelle tige s'écoulant dans la direction de passage (11)
- une vis de serrage (5) qui est insérée à travers le passage de serrage (6), qui s'appuie avec sa tête élargie (5a) d'appui contre un épaulement (6a) dans le passage de serrage (6) et fait saillie à son extrémité libre d'une surface de contact (4a) du corps de base (4) et est vissée dans un galet rainuré (7),
- un passage d'accrochage 16) ouvert en direction d'une des surfaces de liaison (4c, d) formant une entrée (18) ayant un espace de réception (17) présentant une face (17a) ouverte transversalement à sa direction de passage (11) pour le logement d'une tige d'une vis de suspension (15) tige qui s'étend dans la direction de passage (11),
- une broche de verrouillage mobile (8) disposée sur le corps de base (4) qui ferme dans sa position de verrouillage, la face ouverte (17a) de l'espace de réception (17) dans la mesure où la tige d'une vis d'accrochage (15) ne peut pas être retirée de l'espace de réception (17) à travers la face ouverte (17a) et
- un dispositif d'ouverture destiné à déplacer la broche de verrouillage (8) dans une position ouverte
**caractérisé en ce que**
la broche de verrouillage (8) est précontrainte au moyen d'un élément de serrage séparé de la broche de verrouillage (8) dans la position de verrouillage.

2. Dispositif de raccordement selon la revendication 1,
**caractérisé en ce que**
- le corps de base (4) est formée au milieu symétriquement par rapport au plan central (12) qui se trouve au milieu entre les deux surfaces de contact (4a, b), et/ou
- les surfaces de contact (4a, b) sont en retrait dans la zone de l'espace de réception (17) en direction du plan central (12) et en particulier dans cette région le corps de base (4) mesuré dans la direction de passage (11), possède au maximum 50%, mieux au maximum (35%) de l'épaisseur de l'ensemble du corps de base (4), mesurée dans la direction de passage (11),

3. Dispositif de raccordement selon l'une quelconque des revendications précédentes,
**caractérisé en ce que**
- La broche de verrouillage (8) est formée d'un seul tenant avec le corps de base (4) et est élastiquement flexible Pr rapport au corps de base (4), au moins dans une direction de plan parallèle aux surfaces de contact (4a, b), et/ou
- la broche de verrouillage (8) fait saillie depuis la face du passage d'accrochage (16, opposée à l'espace de logement (17), de l'espace de réception (17), dans le passage d'accrochage.

4. Dispositif de raccordement selon l'une quelconque des revendications précédentes,
**caractérisé en ce que**
- le passage d'accrochage (16) s'étend sur la face opposée à l'espace de réception (17) suffisamment loin pour que le fond (16a) du passage d'accrochage (16) est éloigné de l'espace de réception (17) d'au moins deux fois le diamètre de l'espace de réception (17), et / ou
- le passage d'accrochage (16) présente une zone d'entrée en forme d'entonnoir (18) qui est formé par deux surfaces inclinées (18a, b) s'étendant obliquement l'une par rapport à l'autre, et/ou
- un canal de guidage (14) s'étend depuis l'entrée en forme d'entonnoir (18) dans l'espace de réception (17), qui est délimité d'un côté par les broches de verrouillage (8).

5. Dispositif de raccordement selon l'une quelconque des revendications précédentes,
**caractérisé en ce que**
- la broche de verrouillage (8) fait saillie à partir du fond (16a) du passage d'accrochage (16) et/ou
- l'élément de contrainte est un élément élastique, en particulier un ressort de rappel (30), ayant une direction de force transversalement par rapport à la direction d'avance (8') de la broche de verrouillage (8) et parallèlement aux surfaces de contact (4a, b).

6. Dispositif de raccordement selon l'une quelconque des revendications précédentes,
**caractérisé en ce que**
- l'élément de contrainte, en particulier le ressort de rappel (30) s'applique sur la face détournée de l'entrée (18) du passage d'accrochage (18) sur la broche de verrouillage (8) s'engagent, et / ou
- l'élément de serrage, en particulier le ressort de rappel (30), s'appuie d'une part sur la broche de verrouillage (8), en particulier à proximité de son extrémité libre, et d'autre part sur le corps de base (4).

7. Dispositif de raccordement selon l'une quelconque des revendications précédentes,
**caractérisé en ce que**
- l'élément de contrainte, en particulier le ressort de rappel (30), est guidé par l'extrémité détournée de la broche de verrouillage (8) dans un évidement du corps de base (4) et l'évidement est en particulier une ouverture de passage (31) et présente dans zone d'extrémité détournée de la broche de verrouillage (8), une butée démontable et montable depuis la face externe du corps de base (4) pour l'élément de contrainte, et en particulier
- la butée peut être fixée par force de serrage des moyens d'arrêt, par filet ou fermeture à baïonnette sur la périphérie interne de l'évidement, en particulier l'ouverture de passage (31).

8. Dispositif de raccordement selon l'une quelconque des revendications précédentes,
**caractérisé en ce que**
- la butée de vis (32) dans l'état monté, ne dépasse pas du contour extérieur du corps de base (4) sous la forme de de la surface de connexion (4b) et/ou
- la force appliquée par l'élément de contrainte sur la broche de verrouillage (8), est dimensionné de maintenir ou ramener la broche de verrouillage (8) dans la position de verrouillage mais ne la déforme pas en direction de l'entrée (18) du passage d'accrochage (16a).

9. Dispositif de raccordement selon l'une quelconque des revendications précédentes,
**caractérisé en ce que**
- il existe sur le point de contact tourné vers l'élément de contrainte une configuration de surface par complémentarité de forme, en particulier une saillie de guidage (33) et/ou
- le dispositif d'ouverture comprend passage de déverrouillage (13) dans le corps (4) qui est dirigé vers un espace (19) entre la broche de verrouillage (8) et l'entrée (18) et le passage d'accrochage (16) comprend sur la face de la broche de verrouillage (8) opposée à l'espace (19) un espace de déviation (20) pour déplacer la broche de verrouillage (8) dans la position ouverte.

10. Dispositif de raccordement selon l'une quelconque des revendications précédentes,
**caractérisé en ce que**
- la broche de verrouillage (8) présente un prolongement (8a) pointant vers l'espace (19), dont un des flancs forme le canal de guidage (14), et dont la pointe fait saillie en direction de la fente (19), et/ou
- l'ouverture de déverrouillage (13) a une section rectangulaire en particulier, en forme d'arc, qui se réduit en particulier en forme d'entonnoir conique de l'extérieur vers l'intérieur.

11. Dispositif de raccordement selon l'une quelconque des revendications précédentes,
**caractérisé en ce que**
- l'élément de raccordement (3) comprend une pièce auxiliaire (23) en tant qu'aide de montage, qui est fixable sur la face de jonction (4c) avec la face ouverte (17a) de l'espace de réception (17) et peut être fixé et une baie d'accrochage ouverte vers le bas (24) présente pour l'accrochage de la tige d'une vis d'accrochage (15)qui s'engage dans la direction de passage (11), et en particulier
- la pièce auxiliaire (23) peut être fixée au corps de base (4) par insertion dans la direction de passage (11).

12. Dispositif de raccordement selon l'une quelconque des revendications précédentes,
**caractérisé en ce que**
- A l'état monté de la pièce supplémentaire (23) sur l'élément de raccordement (3), la pièce supplémentaire (23) ferme l'entrée (18) du passage d'accrochage (16) et la pièce supplémentaire (23) se trouve en grande partie à l'extérieur du corps (4), et/ou
- à l'état monté de la pièce supplémentaire (23) de l'élément de raccordement (3), la pièce supplémentaire (23) est fixé par concordance des formes en particuliers à la fois au-dessus et au-dessous de l"entrée (18) sur le corps de base (4) de l'élément de raccordement (3).

13. Dispositif de raccordement selon l'une quelconque des revendications précédentes, dans lequel le dispositif de raccordement comprend un élément de raccordement non encliquetable (3') avec
- un corps de base (4) comportant deux surfaces d'appui opposées (4a, b) et deux surfaces de liaison (4c, d) reliant de part et d'autre les surfaces d'appui (4a, b),
- un passage de serrage (6) qui traverse le corps de base (4) de l'une à l'autre surface d'appui (4a, b) dans la direction de passage (11),
- une vis de serrage (5) qui est insérée dans le passage de serrage (6), s'appuie avec sa tête élargie (5a) contre un épaulement (6a) dans le passage de serrage (6) et à son extrémité libre, fait saillie d'une surface de contact (4a) du corps de base (4) et est vissée dans un galet rainuré (7),
**caractérisé par**
- un passage d'accrochage (16') ouvert en direction de l'une des surfaces frontale (4e, f) avec un espace de réception (17') pour recevoir la tige d'une vis d'accrochage (15'),
- l'espace de réception (17') présentant transversalement à la direction de passage (11) une face ouverte (17'a).

14. Dispositif de raccordement selon l'une quelconque des revendications précédentes,
**caractérisé en ce que**
- l'espace de réception (17) présente une entrée conique (18') sur la face ouverte (14' a) et deux flancs (21 a, b) s'étendent parallèlement entre eux entre l'entrée conique (18) et l'espace de réception (17'), et/ou
- la longueur des flancs (21 a, b) est au moins aussi grande pour l'élément de connexion encliquetable (3), que la distance de connexion à partir de l'espace de réception (17) jusqu'au point le plus étroit de la sortie conique (18).

15. Dispositif de raccordement selon l'une quelconque des revendications précédentes,
**caractérisé en ce qu'**
- il est formé sur les surfaces de contacte 84a, b) une saillie de centrage (22a, b) sur au moins une partie de la longueur dans la direction longitudinale (10, la saillie s'engageant dans la rainure (2a, b) des profilés de construction (1a, b), et/ou
- un perçage fileté (26) est disposé dans le corps de base (4' transversalement à la direction de passage en aval de l'espace de réception (17') transversalement à la direction de passage (11') pour visser une vis de sécurité 25, qui traverse le passage d'accrochage (16').

16. Grille de protection (50) composée de
- poteaux espacés (51) monté sur le sol ou au plafond, sous la forme d'un profilé de construction (1 a) et
- de champs de grille intercalés (52) (52) comportant un cadre extérieur périphérique (53), dont les branches s'étendant parallèlement aux montants (51) sont des profilés de construction (1 b), et
- un dispositif de raccordement selon l'une des revendications précédentes, entre les montants (51) et parallèles aux branches des cadres (53).

17. Grille de protection (50) selon la revendication 16,
**caractérisée en ce que**
les éléments de raccordement (3) encliquetés sont montés ave leur surface ouverte de raccordement ouverte (4c) en direction de la surface à verrouiller.
